**Europäisches Patentamt**

**European Patent Office**

**Office européen des brevets**

(19)

(11) Veröffentlichungsnummer: **0 222 209**
**B1**

(12) # EUROPÄISCHE PATENTSCHRIFT

(45) Veröffentlichungstag der Patentschrift:
09.08.89

(51) Int. Cl.⁴: **B01D 53/36**

(21) Anmeldenummer: **86114477.2**

(22) Anmeldetag: **18.10.86**

(54) Katalytisches Abgasbehandlungsverfahren.

(30) Priorität: 28.10.85 DE 3538259

(43) Veröffentlichungstag der Anmeldung:
20.05.87 Patentblatt 87/21

(45) Bekanntmachung des Hinweises auf die Patenterteilung:
09.08.89 Patentblatt 89/32

(84) Benannte Vertragsstaaten:
AT BE CH DE FR GB IT LI NL SE

(56) Entgegenhaltungen:
EP-A- 0 161 470
DE-A- 3 407 277
DE-A- 3 407 277
US-A- 4 403 473

(73) Patentinhaber: **Kali-Chemie Aktiengesellschaft,
Postfach 220 Hans-Böckler-Allee 20,
D-3000 Hannover 1(DE)**

(72) Erfinder: **Walter, Robert, Dr. rer. nat.,
Hindenburgstrasse 64, D-3012 Langenhagen(DE)**
Erfinder: **Schmidt, Torsten, Dr. Ing.,
Odenwaldstrasse 17, D-1000 Berlin 41(DE)**

(74) Vertreter: **Lauer, Dieter, Dr., c/o Kali-Chemie
Aktiengesellschaft Postfach 220,
D-3000 Hannover 1(DE)**

## Beschreibung

Die vorliegende Erfindung betrifft ein Verfahren zur Entfernung von Stickoxiden ($NO_x$) aus Abgasen durch katalytische Reduktion unter Zusatz von Ammoniak.

Abgase aus Wärmekraftwerken und industriellen Anlagen wie beispielsweise Salpetersäureanlagen enthalten unzulässige Mengen an Stickoxiden ($NO_x$) wie Stickstoffmonixid oder Stickstoffdioxid. Diese belasten die Umwelt und müssen daher entfernt werden.

Eine Gruppe von bekannten Verfahren entfernt $NO_x$ katalytisch unter Zusatz von Ammoniak. Unter der Vielzahl der bekannten Katalysatoren arbeitet in der Praxis ein großer Teil nur bei hohen Temperaturen effektiv genug, z.B. bei Temperaturen ab 300° und höher. Eine solche Verfahrensweise ist ungünstig z.B. in bezug auf die Materialauswahl, apparativen Aufwand etc.

Es sind jedoch auch Verfahren der eingangs erwähnten Art bekannt, die bei Abgastemperaturen bis zu 300°C arbeiten. Ein solches Verfahren ist aus der DE-A 3 407 277 bekannt. In diesem Verfahren werden Rauchgase zunächst im Wäscher mit kalkhaltiger Suspension entschwefelt, dann auf die optimalen Betriebstemperaturen des Katalysators wieder aufgewärmt und schliesslich das $NO_x$ entfernt.

Bei Verfahren, die unterhalb von 300°C arbeiten, kommt es bei längerem Betrieb zu unerwünschter Belegung der Katalysatoroberfläche mit inaktiven Komponenten und damit zur Verminderung der katalytischen Aktivität sowie zum Durchbruch von Ammoniak. Dieser Nachteil ist selbst dann nicht zu vermeiden, wenn man – wie bereits vorgeschlagen – bestimmte geometrische Randbedingungen für einen wabenförmigen Katalysator einhält und zusätzlich bei geregelter Abgasgeschwindigkeit arbeitet.

Aufgabe der vorliegenden Erfindung ist es, die geschilderten Nachteile des Standes der Technik zu überwinden, insbesondere die geschilderte Belegung des Katalysators zu vermeiden.

Die Lösung der Aufgabe erfolgt durch das durch die Patentansprüche geschilderte Verfahren.

Das erfindungsgemäße Verfahren arbeitet gattungsgemäß als katalytisches Reduktionsverfahren unter Zusatz von Ammoniak bei einer Abgastemperatur bis zu 300°C und ist dadurch gekennzeichnet, daß man Ammoniak und $NO_x$-haltiges Abgas derart vermischt, daß deren gemeinsame Verweilzeit vor Kontakt mit dem Katalysator maximal 1 Sekunde beträgt, wobei unter "gemeinsamer Verweilzeit" jene Zeit verstanden wird, die sich rechnerisch für eine Temperatur von 273 K unter Berücksichtigung der Randbedingungen (Strömungsgeschwindigkeit, Geometrie etc.) bei Annahme eines pfropfenförmigen Strömungsprofils ergibt, die ein $NH_3$-Molekül zum Durchlaufen der Strecke zwischen Austritt aus der $NH_3$-Leitung und Katalysator-Frontfläche benötigt. Vorzugsweise beträgt die gemeinsame Verweilzeit maximal 0,2 Sekunden, insbesondere max. 0,1 Sekunden.

In üblichen Abgasbehandlungsverfahren wird Ammoniak dem Abgas beispielsweise in statischen Mischern zudosiert. Die gemeinsame Verweilzeit von Ammoniak und $NO_x$-haltigem Abgas in diesen Mischern beträgt üblicherweise mehr als 1 Sekunde. Überraschenderweise gelingt es mit dem erfindungsgemäßen Verfahren durch die angegebene, einfache Verfahrensmaßnahme, eine Belegung des Katalysators zu vermeiden. Ohne die genaue Wirkungsweise zu kennen, wird vermutet, daß durch die erfindungsgemäße Arbeitsweise, d.h. durch die Verkürzung der gemeinsamen Verweilzeit die Entstehung und/oder Ablagerung auf dem Katalysator von festem Ammoniumnitrat/-nitrit, sowie von Ammoniumsulfat/-sulfit aus gegebenenfalls im Abgas vorhandenen Schwefeloxiden, unterbunden wird.

Besondere Varianten des erfindungsgemäßen Verfahrens zeichnen sich durch eines oder mehrere der folgenden Merkmale aus:
- vorzugsweises Arbeiten bei einer Abgastemperatur im Bereich von 150 - 250 °C, insbesondere 150 - 200 °C,
- vorzugsweises Arbeiten bei Raumgeschwindigkeiten (Menge an Gas in m³, die pro 1 h durch 1 m³ Katalysator (Scheinvolumen des Katalysatorbettes) durchgesetzt wird und die angegeben wird mit der Dimension h⁻¹) im Bereich von 5000 - 20000 h⁻¹, insbesondere 5000 bis 15000 h⁻¹
- vorzugsweisen Einsatz von 0,5 bis 1,5 Volumenteile Ammoniak pro Volumenteil $NO_x$, insbesondere weniger als 1 Volumenteil Ammoniak.

In einer vorzugsweisen Variante wird der Zusatz von Ammoniak entsprechend dem Gehalt an Stickstoffoxiden ($NO_x$) im zu behandelnden Abgasstrom geregelt. Für diese Variante sind entsprechende, an sich bekannte Meß- und Regelvorrichtungen vorgesehen. Beispielsweise kann zur kontinuierlichen $NO_x$-Bestimmung aus dem resultierenden Gasstrom ein Teilstrom abgezweigt werden, in dem durch Chemolumineszenz-Analyse der $NO_x$-Gehalt kontinuierlich bestimmt und dieser Meßwert zur Steuerung der Ammoniak-Dosierung verwendet wird.

Als Katalysatoren kommen an sich bekannte Oxidations-Katalysatoren zum Einsatz. Diese können in allen bekannten Formen z.B. als Gewebe, Netze oder Siebe oder als Schüttgut ungeformter oder geformter Teilchen verwendet werden. Bevorzugt kommen auf porösen Trägern fixierte Katalysatoren zum Einsatz, wobei der Träger vorzugsweise in Perlform, als Extrudat oder in Wabenkörperform ausgebildet ist.

Besondere Varianten des Verfahrens zeichnen sich hinsichtlich des Katalysators durch eines oder mehrere der folgenden Merkmale aus:
- das Trägermaterial des Katalysators besteht aus Siliciumdioxid und/oder Alumosilikat
- die katalytisch aktive Komponente ist direkt, d.h. ohne inerte oder aktive Zwischenbeschichtung auf das Trägermaterial aufgebracht
- bei einem wabenförmigen Katalysator beträgt die offene Frontfläche 40 bis 90 % der gesamten Frontfläche
- bei einem wabenförmigen Katalysator beträgt der hydraulische Durchmesser (definiert als 4 x Querschnittsfläche eines Strömungskanals dividiert durch Länge der inneren Peripherie eines Strömungskanals) 1 bis 10 mm.

Unter wabenförmigem Katalysator wird erfindungsgemäß jede an sich bekannte, zellenartig aufgebaute Katalysatorstruktur verstanden, die aus einer Vielzahl paralleler Kanäle besteht, die von Trennwänden von im wesentlich einheitlicher Dicke voneinander getrennt sind.

Die aktive Komponente des Katalysators basiert in einer Variante auf Edelmetall, vorzugsweise Edelmetall der Platin-Gruppe. Bevorzugt wird ein Katalysator, der als Edelmetall Platin, und/oder Palladium enthält. In einer anderen Variante basiert die aktive Komponente des Katalysators auf einem Übergangsmetalloxid, vorzugsweise auf Basis der Übergangsmetalle der 4. Periode. Besonders bewährt haben sich Katalysatoren auf Basis der Oxide von V, Mn und/oder Cu.

Solche Katalysatoren sind kommerziell verfügbar.

In einer weiteren bevorzugten Variante des Verfahrens ist der Katalysator in Strömungsrichtung hinter einer an sich bekannten Staubabscheidungsvorrichtung angebracht. Letzere kann beispielsweise als Elektrofilter, Zyklon oder Naßabscheidungsstufe ausgebildet sein.

Das erfindungsgemäße Verfahren kann als alleinige Behandlungsstufe vorgesehen sein. Es kann aber auch als Baustein einer an sich bekannten Kombination von mehreren Stufen eingesetzt werden, wie sie beispielsweise aus DE-A 3 107 117 oder DE-A 3 208 767 bekannt sind. Bei einer Kombination mit der bekannten, vorgeschalteten alkalischen Wäsche wird bevorzugt ein Katalysator mit $SiO_2$ und/oder Alumosilikat-Träger auf Basis Edelmetall verwendet.

Mit dem erfindungsgemäßen Verfahren ist es möglich, Abgas zu behandeln, das $NO_x$ als Primärschadstoff enthält und/oder Abgas, bei dem $NO_x$ intermediär als Sekundär-Schadstoff aus Stickstoffhaltigen Primärschadstoffen entsteht. Solche Stickstoff-haltigen Schadstoffe können beispielsweise sein:
- primäre, sekundäre, tertiäre aliphatische Amine mit Alkylresten von insbesondere 1 bis 6 C-Atomen wie beispielsweise Mono-, Di-, Tri-methyl-, -äthyl, -n-propyl-, -n-butylamin, Mono-, Di-isopropyl-, -iso-butyl-, -sec-butylamin, tert. Butylamin
- Cycloalkylamine wie Cyclohexylamin, N-Methyl-,-N,N-Dimethyl-Cyclohexylamin, Dicyclohexylanilin
- Di- und Polyamine wie Mono-, Di-, Triäthylendiamin
- cyclische Amine wie Piperidin, Morpholin, N-Methyl-, N-Äthylmorpholin
- aromatische Amine wie Anilin, Toluidine, Xylidine, Aminophenole, Benzylamine
- Nitrile, insbesondere aliphatische Nitrile wie Aceto-, Propio-, Butyronitril, Acrylnitril, Methacrylnitril
- Nitroverbindungen, z.B. aliphatische Nitroverbindungen wie Nitromethan, -äthan, -propan oder z.B. aromatische Nitroverbindungen wie Nitrobenzol, Nitrotoluole
- stickstoff-haltige Heterocyclen wie Pyridin, Pyrrol
- Amidderivate, wie z.B. N,N-Dimethylformamid,
- Cyanwasserstoff.

Eine Vorrichtung zur Verwendung im erfindungsgemäßen Verfahren erzeugt zweckmäßig eine hochturbulente Strömung vor Eintritt in den Katalysator. Durch die im hochturbulenten Strömungsfeld auftretenden hohen örtlichen Geschwindigkeitsunterschiede erfolgt ein schneller Ausgleich von Konzentrationsunterschieden.

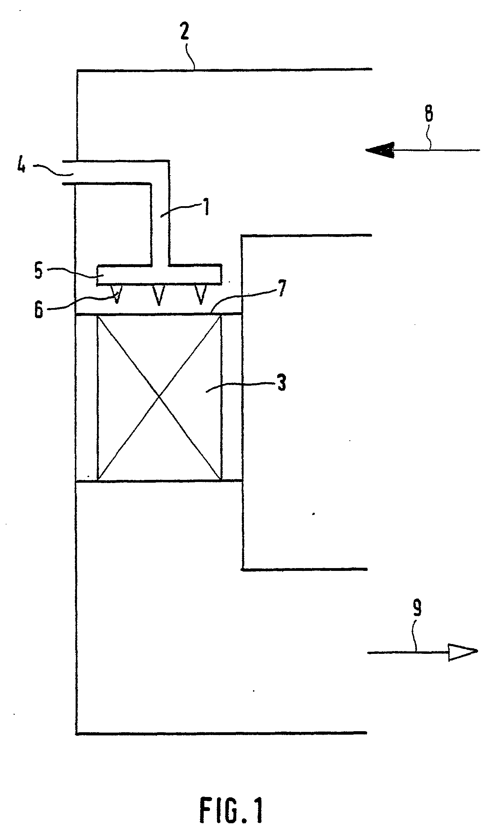

Diese Vorrichtung soll am Beispiel der in Fig. 1 gezeigten Ausführungsform näher beschrieben werden. Fig. 1 zeigt den prinzipiellen Aufbau der Vorrichtung anhand eines Schnittes längs einer Abgasleitung (2). Die Vorrichtung besteht aus Ammoniak-Zuführung (4) und (1) und Ammoniak-Verteilung (5) sowie Katalysator (3). Ammoniak-Verteilung (5) und/oder Ammoniakzufuhr (4) und (1) können erfindungsgemäß als statisches oder dynamisches System ausgeführt werden. Bei der Ausführung als dynamisches System vollführen Ammoniak-Verteilung (5) und/oder Ammoniak-Zufuhr (1) eine Rotationsbewegung, wobei vorzugsweise die Rotationsachse in Strömungsrichtung des Gases liegt. Die kinetische Energie der Rotationsbewegung kann durch einen externen Antrieb zugeführt werden oder aus der Strömungsenergie des Abgasstromes und/oder des Ammoniak-Stromes entnommen werden. Zur Nutzung der Strömungsenergie des Abgasstromes können geeignete Konstruktionselemente (z.B. Propeller) an der Ammoniak-Verteilung (5) und/oder Ammoniak-Zuführung (1) vorgesehen sein.

Die Nutzung der Strömungsenergie des Ammoniak-Stromes erfolgt durch geeignete Ausführung und Anordnung der Injektionsmittel (6).

Der Abstand der Injektionsmittel (6) von der Frontfläche (7) des Katalysators (3) ist dabei derart bemessen, daß die gemeinsame Verweilzeit von Abgas und Ammoniak vor der Katalysatorfrontfläche (7) maximal 1 Sekunde beträgt.

Zur Erzeugung eines großen Impulsstromes und einer grossen Impulsstromdichte muß die Austrittsgeschwindigkeit des Ammoniak-Stromes aus den Injektionsmitteln (6) auf einen hohen Wert eingestellt werden, der im Regelfall sehr viel höher als die mittlere Geschwindigkeit des Abgasstromes ist. Durch den großen Impulsstrom wird gegebenenfalls die Rotationsbewegung des dynamischen Systems angetrieben.

Die hohe Impulsdichte bewirkt eine starke Turbulenz, die zur schnellen und gleichmäßigen Vermischung von Ammoniakstrom und Abgasstrom führt. Zur Einstellung dieser Bedingungen erweist sich die Vormischung des Ammoniak-Stromes mit geeigneten Zusatzgasen wie z.B. Luft als hilfreich.

Für die konstruktive Gestaltung der Ammoniak-Verteilung (5) sind verschiedene Bauformen möglich. So kann dieses als Ringleitung ausgeführt werden, oder aus mehreren, auch gekreuzten, gestreckten bzw. gekrümmten Hohlkörpern zusammengesetzt sein.

Bei jeder Bauform muß die Anordnung der Injektionsmittel so gewählt werden, daß im Betrieb die Ammoniakstromdichte über die gesamte Katalysatoranströmfläche möglichst gleichmäßig ist. Zur Einhaltung dieser Bedingung ist auch eine mehrfache Anordnung der Ammoniakverteilung (5) eine Lösung.

Die Vorrichtung umfaßt ebenfalls Teile zur Lagerung der Vorrichtung in der Abgasleitung (2). Im Fall der Ausführung als dynamisches System sind geeignete Lagerungen der rotierenden Teile gegen die ruhenden vorzusehen. Diese können sich sowohl innerhalb als auch außerhalb der Abgasleitung befinden.

In Fig. 1 ist die Strömungsrichtung von unbehandeltem Abgas (8) und behandeltem Abgas (9) durch Pfeile gekennzeichnet.

In einer besonderen Variante des Verfahrens, insbesondere bei Einsatz von schüttgutförmigen Katalysatoren kann Ammoniak auch direkt in die mit katalytisch aktivem Material beschickte Zone eingespeist werden.

Die nachfolgenden Beispiele sollen die Erfindung näher beschreiben, ihren Umfang aber nicht begrenzen.

Beispiele:

In einer Vorrichtung, die dem in Fig. 1 dargestellten Prinzip entsprach, wurde $NO_x$ und $SO_2$ enthaltendes Abgas mit einer Raumgeschwindigkeit von 10000 $h^{-1}$ über einen wabenförmigen Katalysator auf Basis Edelmetall (Katalysator KCO WK 220 J der Firma Kali-Chemie AG)geleitet. Die Ammoniak-Verteilung (5) war als Ringleitung ausgebildet und verstellbar angeordnet hinsichtlich ihres Abstandes zur Frontfläche (7) des Katalysators (3).

Bei Variation der gemeinsamen Verweilzeit und/oder des Molverhältnisses $NH_3$ zu $SO_2$ ergaben sich folgende Ergebnisse, aus denen ersichtlich ist, daß eine Bildung von Ammoniumsulfat/-sulfit praktisch nicht stattfindet (Spalte "Umsatz $SO_2$"). Ebensowenig wurde Ammoniumnitrat/-nitrit gebildet. Der Grad der $NO_x$-Entfernung war in allen Fällen unverändert gut.

| gemeinsame Verweilzeit | molares Verhältnis $NH_3$:$SO_2$ | Temperatur | Umsatz $SO_2$ |
|---|---|---|---|
| 0,07 s | 1 | 200°C | 0% |
| 0,15 s | 1 | 200°C | 1% |
| 1,0 s | 1 | 200°C | 1% |
| 0,07 s | 5 | 200°C | 0% |
| 0,15 s | 5 | 200°C | 4% |
| 1,0 s | 5 | 200°C | 5% |

**Patentansprüche**

1. Verfahren zur Entfernung von Stickoxiden ($NO_x$) aus Abgasen durch katalytische Reduktion unter Zusatz von Ammoniak, wobei man bei einer Abgastemperatur bis zu 300°C arbeitet, dadurch gekennzeichnet, daß man Ammoniak und $NO_x$-haltiges Abgas derart vermischt, daß deren gemeinsame Verweilzeit vor Kontakt mit dem Katalysator maximal 1 Sekunde beträgt, wobei unter "gemeinsamer Verweilzeit" jene Zeit verstanden wird, die sich rechnerisch für eine Temperatur von 273 K unter Berücksichtigung der Randbedingungen (Strömungsgeschwindigkeit, Geometrie etc.) bei Annahme eines pfropfenförmigen Strömungsprofils ergibt, die ein $NH_3$-Molekül zum Durchlaufen der Strecke zwischen Austritt und der $NH_3$-Leitung und Katalysator-Frontfläche benötigt.

2. Verfahren nach Anspruch 1, dadurch gekennzeichnet, daß die gemeinsame Verweilzeit maximal 0,2 Sekunden beträgt.

3. Verfahren nach einem der vorhergehenden Ansprüche, dadurch gekennzeichnet, daß man bei einer Abgastemperatur von 150-250 °C, vorzugsweise 150-200 °C arbeitet.

4. Verfahren nach einem der vorhergehenden Ansprüche, dadurch gekennzeichnet, daß man bei einer Raumgeschwindigkeit von 5000 bis 20000 $h^{-1}$ arbeitet.

5. Verfahren nach einem der vorhergehenden Ansprüche, dadurch gekennzeichnet, daß man einen Katalysator verwendet, dessen Trägermaterial aus $SiO_2$ und/oder Alumosilikat besteht.

6. Verfahren nach einem der vorhergehenden Ansprüche, dadurch gekennzeichnet, daß man einen Katalysator auf Basis Edelmetall, vorzugsweise Edelmetall der Platin-Gruppe einsetzt.

7. Verfahren nach einem der Ansprüche 1 bis 5, dadurch gekennzeichnet, daß man einen Katalysator auf Basis Übergangsmetalloxid, vorzugsweise auf Basis der Übergangsmetalle der 4. Periode, einsetzt.

8. Verfahren nach einem der vorhergehenden Ansprüche, dadurch gekennzeichnet, daß das Trägermaterial des Katalysators direkt mit der katalytisch aktiven Komponente beschichtet ist.

9. Verfahren nach einem der vorhergehenden Ansprüche, dadurch gekennzeichnet, daß der Katalysator als Wabenkörper ausgebildet ist.

10. Verfahren nach einem der vorhergehenden Ansprüche, dadurch gekennzeichnet, daß der Katalysator in Strömungsrichtung hinter einer Staubabscheidungsvorrichtung angebracht ist.

11. Verfahren nach einem der vorhergehenden Ansprüche, dadurch gekennzeichnet, daß man pro Volumenteil $NO_x$ 0,5 bis 1,5 Volumenteile Ammoniak dosiert.

12. Verfahren nach Anspruch 11, dadurch gekennzeichnet, daß man pro Volumenteil $NO_x$ weniger als 1 Volumenteil Ammoniak dosiert.

## Claims

1. Method for removing nitrogen oxides ($NO_x$) from exhaust gases by catalytic reduction with the addition of ammonia, whereby one operates at an exhaust gas temperature of up to 300°C, characterised in that ammonia and $NO_x$-containing exhaust gas are mixed so that their joint sojourn time before contact with the catalyst is a maximum of 1 second, "joint sojourn time" being understood to be the time which is theoretically obtained for a temperature of 273 K, taking into accjount the marginal conditions (rate of flow, geometry etc) when a stopper-shaped flow profile is assumed, which an $NH_3$ molecule requires to pass along the distance between the outlet from the $NH_3$ pipe and the front surface of the catalyst.

2. Method according to Claim 1, characterised in that the joint sojourn time is a maximum of 0.2 seconds.

3. Method according to one of the preceding Claims, characterised in that one operates at an exhaust gas temperature of 150–250°C, preferably 150–200°C.

4. Method according to one of the preceding claims, characterised in that one operates at a space velocity of 5,000 to 20,000 $h^{-1}$.

5. Method according to one of the preceding Claims, characterised in that a catalyst is used, the carrier material of which consists of $SiO_2$ and/or alumosilicate.

6. Method according to one of the preceding Claims, characterised in that a catalyst on the basis of noble metal, preferably a noble metal of the platinum group, is used.

7. Method according to one of Claims 1 to 5, characterised in that a catalyst on the basis of a transition metal oxide, preferably on the basis of the transition metals of the 4th period, is used.

8. Method according to one of the preceding Claims, characterised in that the carrier material of the catalyst is coated directly with the catalytically active component.

9. Method according to one of the preceding Claims, characterised in that the catalyst is formed as a honeycomb body.

10. Method according to one of the preceding Claims, characterised in that the catalyst is located in the direction of flow after a dust-separating device.

11. Method according to one of the preceding Claims, characterised in that 0.5 to 1.5 parts by volume ammonia are added per part by volume $NO_x$.

12. Method according to Claim 11, characterised in that less than 1 part by volume ammonia is added per part by volume $NO_x$.

## Revendications

1. Procédé pour l'élimination d'oxydes d'azote ($NO_x$) de gaz d'échappement par réduction catalytique avec addition d'ammoniac, dans lequel on travaille à une température des gaz d'échappement allant jusqu'à 300°C, caractérisé en ce que l'on mélange l'ammoniac et le gaz d'échappement renfermant $NO_x$ de telle de sorte que leur temps de séjour en commun avant le contact avec le catalyseur soit d'au maximum une seconde, et on entend par "temps de séjour en commun" le temps nécessaire à une molécule de $NH_3$ pour parcourir la distance entre la sortie de la conduite de $NH_3$ et la surface frontale du catalyseur, ce temps étant obtenu par le calcul pour une température de 273 K en tenant compte des conditions périphériques (vitesse d'écoulement, géométrie etc.) en admettant un profil d'écoulement en forme de bouchon.

2. Procédé selon la revendication 1, caractérisé en ce que le temps de séjour en commun atteint au maximum 0,2 s.

3. Procédé selon l'une des revendications précédentes, caractérisé en ce que l'on opère à une température des gaz d'échappement de 150 à 250°C, de préférence de 150 à 200°C.

4. Procédé selon l'une des revendications précédentes, caractérisé en ce que l'on opère à une vitesse spatiale de 5000 à 20.000 $h^{-1}$.

5. Procédé selon l'une des revendications précédentes, caractérisé en ce que l'on utilise un catalyseur dont le matériau support est constitué de $SiO_2$ et/ou de silicate d'aluminium.

6. Procédé selon l'une des revendications précédentes, caractérisé en ce que l'on met en œuvre un catalyseur à base de métal noble, de préférence un métal noble du groupe du platine.

7. Procédé selon l'une des revendications 1 à 5, caractérisé en ce que l'on met en œuvre un catalyseur à base d'oxyde de métal de transition, de préférence d'un métal de transition du quatrième groupe.

8. Procédé selon l'une des revendications précédentes, caractérisé en ce que le matériau support du catalyseur est directement recouvert avec le constituant catalytique actif.

9. Procédé selon l'une des revendications précédentes, caractérisé en ce que le catalyseur est conformé en nid d'abeille.

10. Procédé selon l'une des revendications précédentes, caractérisé en ce que le catalyseur est agencé dans le sens de l'écoulement sous un dispositif séparateur de poussières.

11. Procédé selon l'une des revendications précédentes, caractérisé en ce que l'on dose pour une partie en volume de $NO_x$, 0,5 à 1,5 parties en volume d'ammoniac.

12. Procédé selon la revendication 11, caractérisé en ce que l'on dose moins de une partie en volume d'ammoniac par partie en volume de $NO_x$.

FIG.1